# EUROPEAN PATENT APPLICATION

(11) **EP 4 707 769 A1**
(43) Date of publication of application: **11.03.2026**
(21) Application number: 25196436.7
(22) Date of filing: 18.08.2025
(51) Int. Cl.: G01M 17/007

(54) **SYSTEM**

(30) Priority: 04.09.2024 JP 2024152185
(71) Applicant: TOYOTA JIDOSHA KABUSHIKI KAISHA, Toyota-shi, Aichi-ken 471-8571 (JP)
(72) Inventor: IWAHORI, Kento, Toyota-shi, 471-8571 (JP); NAMMIYO, Rei, Toyota-shi, 471-8571 (JP); SAITO, Yasuhiro, Kariya-shi, 448-8666 (JP)
(74) Representative: J A Kemp LLP

(57) **Abstract**

A system comprises: a vehicle capable of running by unmanned driving; an inspection facility having a roller to rotate while supporting a wheel of the vehicle; a first sensor that detects the position of the vehicle; a second sensor that detects the position of the vehicle, the second sensor detecting the position of the vehicle with higher accuracy than the first sensor; and a controller that acquires position information about the vehicle using at least one of the first sensor and the second sensor and controls the vehicle using the position information. The controller acquires the position information using the first sensor if a condition set in advance including a provision that the vehicle be over the roller is not fulfilled, and acquires the position information using at least the second sensor if the condition is fulfilled.

## Description

### CROSS REFERENCE TO RELATED APPLICATIONS

This application claims priority to Japanese Patent Application No. 2024-152185, filed September 4, 2024, the disclosure of which is incorporated by reference herein in its entirety.

### BACKGROUND

### FIELD

The present disclosure relates to a system.

There is a known technique by which a vehicle is caused to run by unmanned driving in a step of manufacturing the vehicle (for example, Japanese Patent Application Publication (Translation of PCT Application) No. 2017-538619).

There is a known inspection by which a wheel is rotated over a roller without moving a vehicle. As an example, for inspection on a driving device of the vehicle, the wheel is driven to rotate to rotate the roller dependently. For inspection on a braking device of the vehicle, the roller is driven to rotate to rotate the wheel dependently. If the position of the vehicle is shifted to right and left during these inspections, continuing the inspections might become impossible due to deviation of the vehicle from over the roller. This induces a desire for a technique for reducing a likelihood of deviation of the vehicle being inspected from over the roller.

### SUMMARY

The present disclosure is feasible in the following aspects.
(1) According to one aspect of the present disclosure, a system is provided. The system comprises: a vehicle capable of running by unmanned driving; an inspection facility having a roller to rotate while supporting a wheel of the vehicle; a first sensor that detects the position of the vehicle; a second sensor that detects the position of the vehicle, the second sensor detecting the position of the vehicle with higher accuracy than the first sensor; and a controller that acquires position information about the vehicle using at least one of the first sensor and the second sensor and controls the vehicle using the position information. The controller acquires the position information using the first sensor if a condition set in advance including a provision that the vehicle be over the roller is not fulfilled, and acquires the position information using at least the second sensor if the condition is fulfilled.
   According to the system of this aspect, it is possible to reduce a likelihood of deviation of the vehicle being inspected from over the roller.
(2) In the system of the above-described aspect, the condition may further include a provision that the rotation speed of the wheel or the rotation speed of the roller be equal to or greater than a rotation speed set in advance.
   As the rotation speed of the wheel or the roller becomes higher, the position of the vehicle is shifted to right and left more easily. According to the system of this aspect, in a situation where the position of the vehicle is shifted to right and left easily, the position information is acquired using the second sensor that detects the position of the vehicle with higher accuracy than the first sensor. Thus, it is possible to reduce a likelihood of deviation of the vehicle being inspected from over the roller.
(3) In the system of the above-described aspect, the condition may further include a provision that a degree of unevenness of the position of the vehicle detected by the first sensor be equal to or greater than a degree set in advance.
   As a degree of unevenness of the position of the vehicle detected by the first sensor becomes larger, a difference between the position of the vehicle detected by the first sensor and an actual position of the vehicle is likely to become larger. This makes the vehicle being inspected likely to deviate from over the roller. According to the system of this aspect, in a situation where a degree of unevenness of the position of the vehicle detected by the first sensor is large, the position information is acquired using the second sensor. Thus, it is possible to reduce a likelihood of deviation of the vehicle being inspected from over the roller.
(4) In the system of the above-described aspect, if the condition is fulfilled, the controller may acquire the position information using the first sensor and the second sensor, and the controller may change a contribution of the first sensor and a contribution of the second sensor to the position information in response to the rotation speed of the wheel or the rotation speed of the roller.
   To reduce a likelihood of deviation of the vehicle being inspected from over the roller, the position of the vehicle is preferably adjusted more accurately as the rotation speed of the wheel or the roller becomes higher. According to the system of this aspect, a contribution of the first sensor and a contribution of the second sensor to the position information about the vehicle is changed in response to the rotation speed of the wheel or the roller, making it possible to adjust the position of the vehicle accurately over the roller.
(5) In the system of the above-described aspect, if the condition is fulfilled, the controller may acquire the position information using the first sensor and the second sensor, and the controller may change a contribution of the first sensor and a contribution of the second sensor to the position information in response to a degree of unevenness of the position of the vehicle detected by the first sensor.

As a degree of unevenness of the position of the vehicle becomes larger, it becomes more difficult to adjust the position of the vehicle accurately. According to the system of this aspect, a contribution of the first sensor and a contribution of the second sensor to the position information about the vehicle is changed in response to a degree of unevenness of the position of the vehicle detected by the first sensor, making it possible to adjust the position of the vehicle accurately over the roller.

The present disclosure is also feasible in various aspects other than the system. For example, the present disclosure may be realized in aspects including a control method, a vehicle, a server, an inspection facility, a computer program, a recording medium storing a computer program, and the like.

### BRIEF DESCRIPTION OF THE DRAWINGS

Fig. 1 is an explanatory view showing the configuration of a system according to a first embodiment;
Fig. 2 is an explanatory view showing the configuration of a vehicle according to the first embodiment;
Fig. 3 is an explanatory view showing the configuration of a server according to the first embodiment;
Fig. 4 is an explanatory view showing the configuration of an inspection facility according to the first embodiment;
Fig. 5 is an explanatory view showing how the vehicle runs by remote control;
Fig. 6 is a flowchart showing a processing procedure of running control over the vehicle according to the first embodiment;
Fig. 7 is an explanatory view showing how the vehicle is inspected;
Fig. 8 is a flowchart showing a processing procedure of deviation preventing control according to the first embodiment;
Fig. 9 is an explanatory view showing the configuration of a vehicle according to a second embodiment; and
Fig. 10 is a flowchart showing a processing procedure of running control over a vehicle according to the second embodiment.

### DETAILED DESCRIPTION

### A. First Embodiment

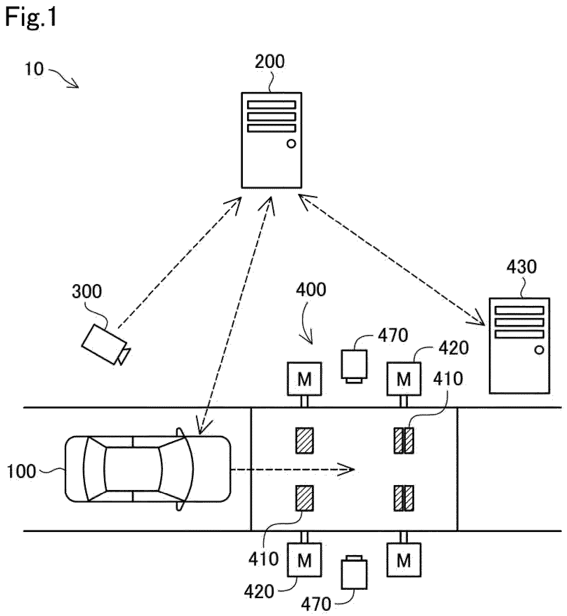

Fig. 1 is an explanatory view showing the configuration of a system 10 according to a first embodiment. The system 10 includes a vehicle 100, a server 200, an external sensor 300, and an inspection facility 400. In the present embodiment, the system 10 is used in a factory FC where the vehicle 100 is manufactured. In the present embodiment, the server 200 corresponds to a "controller" of the present disclosure, the external sensor 300 corresponds to a "first sensor" of the present disclosure, and a position sensor 470 of the inspection facility 400 corresponds to a "second sensor" of the present disclosure.

In the present embodiment, the vehicle 100 is a four-wheel battery electric vehicle (BEV). The vehicle 100 may be a passenger car, or may be a bus or a truck. A system for driving the vehicle 100 may be a front-wheel driving system, a rear-wheel driving system, or a four-wheel drive system. The vehicle 100 is not limited to a battery electric vehicle but may be a gasoline vehicle, a hybrid vehicle, or a fuel cell vehicle, for example. The vehicle 100 is not limited to a four-wheel vehicle but may be a three-wheel vehicle or a six-wheel vehicle, for example.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

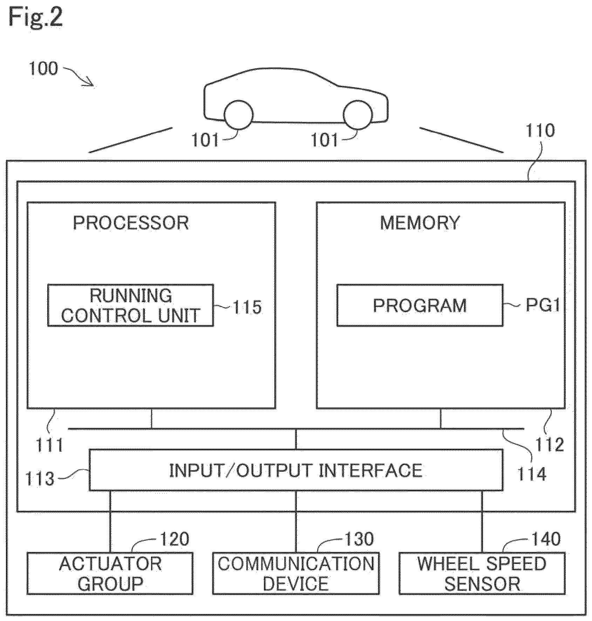

Fig. 2 is an explanatory view showing the configuration of the vehicle 100. The vehicle 100 has four wheels 101. The four wheels 101 include a pair of right and left front wheels and a pair of right and left rear wheels. In the present embodiment, the vehicle 100 is configured to be capable of running by remote control. The vehicle 100 includes a vehicle controller 110 that controls each part of the vehicle 100, an actuator group 120 to be driven under control by the vehicle controller 110, a communication device 130 for making communication externally, and a wheel speed sensor 140 for detecting the rotation speed of the wheel 101. The actuator group 120 includes an actuator of a driving device for generating driving force for the vehicle 100, an actuator of a steering device for changing a traveling direction of the vehicle 100, and an actuator of a braking device for generating braking force for the vehicle 100.

The vehicle controller 110 is configured using a computer including a processor 111, a memory 112, an input/output interface 113, and an internal bus 114. The processor 111, the memory 112, and the input/output interface 113 are connected to each other via the internal bus 114 in a manner allowing bidirectional communication therebetween. The actuator group 120, the communication device 130, and the wheel speed sensor 140 are connected to the input/output interface 113. The communication device 130 communicates with the server 200 via radio communication. The communication device 130 may communicate with the external sensor 300 or the inspection facility 400 via radio communication.

The processor 111 executes a computer program PG1 stored in advance in the memory 112 to function as a running control unit 115. While a passenger is on the vehicle 100, the running control unit 115 controls the actuator group 120 in response to operation by the passenger, thereby allowing the vehicle 100 to run. Independently of whether a passenger is on the vehicle 100, the running control unit 115 also allows the vehicle 100 to run by controlling the actuator group 120 using a running control signal received from the server 200. In the present embodiment, the running control signal includes the acceleration and the rudder angle of the vehicle 100 as parameters. The running control signal may include the speed of the vehicle 100 as a parameter instead of the acceleration of the vehicle 100 or in addition to the acceleration of the vehicle 100.

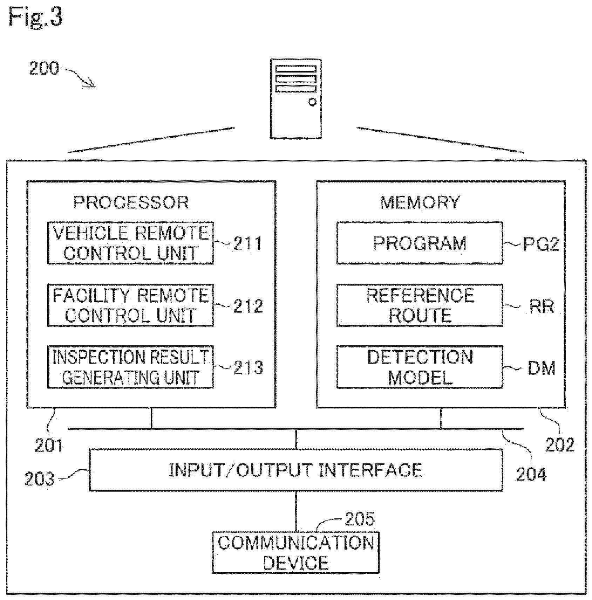

Fig. 3 is an explanatory view showing the configuration of the server 200. The server 200 is located outside the vehicle 100. The server 200 is configured using a computer including a processor 201, a memory 202, an input/output interface 203, and an internal bus 204. The processor 201, the memory 202, and the input/output interface 203 are connected to each other via the internal bus 204 in a manner allowing bidirectional communication therebetween. A communication device 205 for making communication externally is connected to the input/output interface 203. In the present embodiment, the communication device 205 communicates with the vehicle 100 via radio communication, and communicates with the external sensor 300 and the inspection facility 400 via wire communication or radio communication.

The processor 201 executes a computer program PG2 stored in advance in the memory 202 to function as a vehicle remote control unit 211 that controls the vehicle 100 remotely, a facility remote control unit 212 that controls the inspection facility 400 remotely, and an inspection result generating unit 213 that generates inspection results about the vehicle 100.

As shown in Fig. 1, the external sensor 300 is located outside the vehicle 100. The external sensor 300 is used for detecting the position of the vehicle 100. In the present embodiment, the external sensor 300 is a camera provided at the factory FC. The external sensor 300 includes a communication device not shown in the drawings, and communicates with the server 200 via wire communication or radio communication.

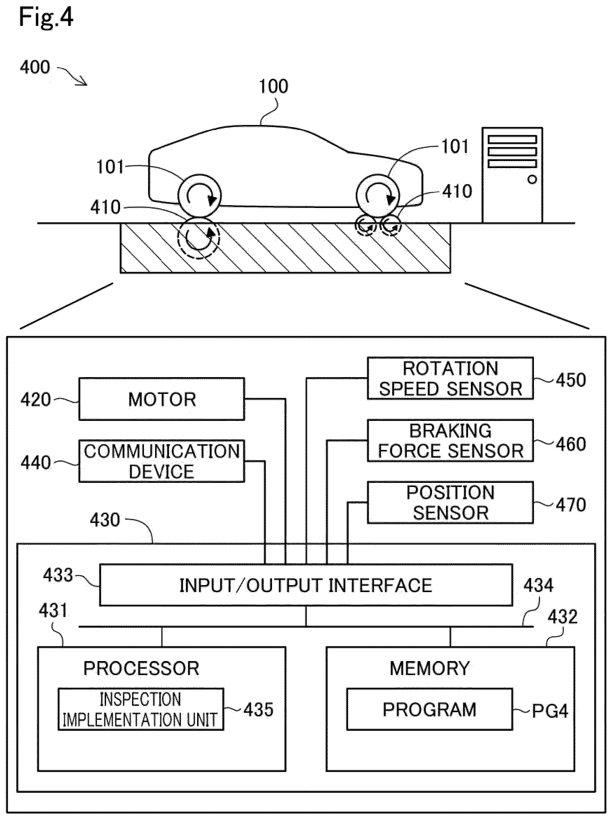

Fig. 4 is an explanatory view showing the configuration of the inspection facility 400. The inspection facility 400 is a facility for inspection on the vehicle 100. In the present embodiment, the inspection facility 400 includes a roller 410, a motor 420 to rotate the roller 410, a facility controller 430 that controls each part of the inspection facility 400, a communication device 440 for making communication externally, a rotation speed sensor 450 that detects the rotation speed of the roller 410, a braking force sensor 460 that detects braking force of the vehicle 100 applied to the roller 410, and a position sensor 470 that detects the position of the vehicle 100.

The roller 410 is installed on a road surface. The roller 410 is configured to be rotatable while supporting the wheel 101. In the present embodiment, the inspection facility 400 is configured to support one front wheel using two small-diameter rollers and support one rear wheel using one large-diameter roller. Namely, in the present embodiment, the inspection facility 400 includes six rollers 410. The small-diameter roller means the roller 410 having a small diameter. The large-diameter roller means the roller 410 having a large diameter. The inspection facility 400 includes a plurality of the motors 420. The plurality of motors 420 includes a motor 420 for rotating the roller 410 for front wheel, and a motor 420 for rotating the roller 410 for rear wheel. The inspection facility 400 may be configured to support one front wheel using one large-diameter roller and support one rear wheel using two small-diameter rollers. The inspection facility 400 may be configured to support one front wheel using two small-diameter rollers and support one rear wheel using two small-diameter rollers.

The facility controller 430 is configured using a computer including a processor 431, a memory 432, an input/output interface 433, and an internal bus 434. The processor 431, the memory 432, and the input/output interface 433 are connected to each other via the internal bus 434 in a manner allowing bidirectional communication therebetween. The motor 420, the communication device 440, the rotation speed sensor 450, the braking force sensor 460, and the position sensor 470 are connected to the input/output interface 433. In the present embodiment, the communication device 440 communicates with the server 200 via radio communication or wire communication. The communication device 440 may communicate with the vehicle 100 via radio communication.

The position sensor 470 detects the position of the vehicle 100. Accuracy of detection of the position of the vehicle 100 by the position sensor 470 is higher than accuracy of detection of the position of the vehicle 100 by the external sensor 300. In the present disclosure, accuracy of position detection means a degree of match between a position detected by a sensor and an actual position. In the present embodiment, the position sensor 470 is a laser displacement meter, and detects a right-left position of the vehicle 100 relative to the inspection facility 400 by emitting laser light to the vehicle 100 from a side lateral to the vehicle 100. A position resolution of the position sensor 470 is higher than a position resolution of the external sensor 300. Unevenness of a position detected by the position sensor 470 is less than unevenness of a position detected by the external sensor 300. The position sensor 470 is not limited to a laser displacement meter but may be a sonar sensor, for example.

The processor 431 executes a computer program PG4 stored in advance in the memory 432 to function as an inspection implementation unit 435 that implements an inspection on the vehicle 100. In the present embodiment, the inspection implementation unit 435 implements an inspection on the vehicle 100 in response to a control signal transmitted from the server 200. More specifically, the inspection implementation unit 435 implements control over the motor 420, detection of the rotation speed using the rotation speed sensor 450, detection of braking force using the braking force sensor 460, and detection of the position of the vehicle 100 using the position sensor 470.

In the present embodiment, the inspection facility 400 has a function as a drum tester for inspection, for example, on the driving device of the vehicle 100 while the wheel 101 is driven to rotate to rotate the roller 410 dependently, and a function as a brake tester for inspection, for example, on the braking device of the vehicle 100 while the roller 410 is driven to rotate to rotate the wheel 101 dependently. Meanwhile, the inspection facility 400 may not have to be equipped with one of the function as the drum tester and the function as the brake tester. If the inspection facility 400 is not equipped with the function as the brake tester, the inspection facility 400 may not have to be equipped with the motor 420 and the braking force sensor 460.

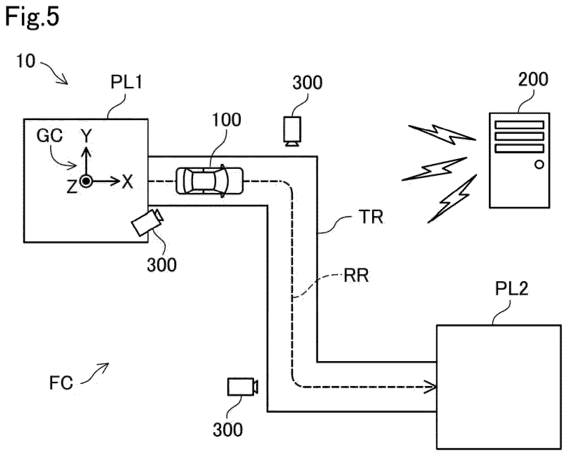

Fig. 5 is an explanatory view showing how the vehicle 100 runs by remote control in the factory FC. In the present embodiment, the system 10 is used in the factory FC where the vehicle 100 is manufactured. A reference coordinate system in the factory FC is a global coordinate system GC, and an arbitrary location in the factory FC may be expressed by X, Y, and Z coordinates in the global coordinate system GC. The factory FC has a first place PL1 and a second place PL2. The first place PL1 and the second place PL2 are connected to each other via a track TR allowing the vehicle 100 to run therethrough. The factory FC is equipped with a plurality of the external sensors 300 installed along the track TR. The position of each external sensor 300 in the factory FC is adjusted in advance.

In the present embodiment, the first place PL1 is a place for implementation of assembly of the vehicle 100. At a time when the vehicle 100 is assembled in the first place PL1, the vehicle 100 is mounted at least with the vehicle controller 110, the actuator group 120, and the communication device 130. Thus, at a time when the vehicle 100 is assembled in the first place PL1, the vehicle 100 is in a state capable of running by remote control. After the vehicle 100 is assembled in the first place PL1, the vehicle 100 is controlled remotely by the server 200 to move from the first place PL1 to the second place PL2 through the track TR. The second place PL2 is a place for implementation of an inspection on the vehicle 100. The inspection facility 400 is located in the second place PL2. If the vehicle 100 passes the inspection in the second place PL2, the vehicle 100 is thereafter shipped from the factory FC.

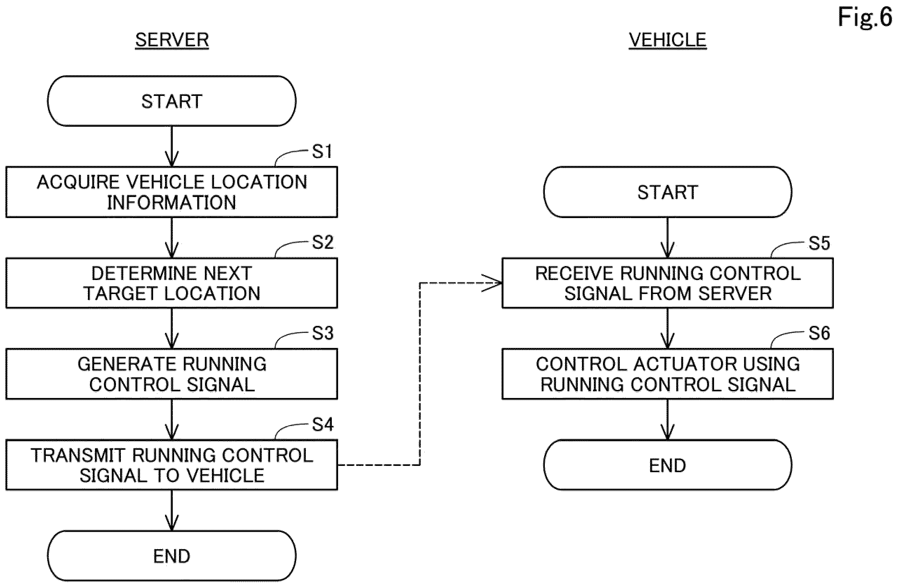

Fig. 6 is a flowchart showing a processing procedure of running control over the vehicle 100 according to the present embodiment. In step S1, the processor 201 of the server 200 acquires vehicle location information using detection result output from the external sensor 300. The external sensor 300 is located outside the vehicle 100. The vehicle location information is locational information as a basis for generating a running control signal. In the present embodiment, the vehicle location information includes the location and orientation of the vehicle 100 in the reference coordinate system of the factory FC. In the present embodiment, the reference coordinate system of the factory FC is the global coordinate system GC and a location in the factory FC can be expressed by X, Y, and Z coordinates in the global coordinate system GC. In the present embodiment, the external sensor 300 is a camera that is disposed in the factory FC and outputs a captured image as detection result. In step S1, the processor 201 acquires the vehicle location information using the captured image acquired from the camera as the external sensor 300.

More specifically, in step S1, the processor 201 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system GC, thereby acquiring the location of the vehicle 100. The outer shape of the vehicle 100 in the captured image may be detected by inputting the captured image to a detection model DM using artificial intelligence, for example. The detection model DM is prepared in the system 10 or outside the system 10. The detection model DM is stored in advance in the memory 202 of the server 200, for example. An example of the detection model DM is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model DM and the label. The processor 201 can acquire the orientation of the vehicle 100 through estimation based on the direction of a motion vector of the vehicle 100 detected from change in location of a feature point of the vehicle 100 between frames of the captured images using optical flow process, for example.

In step S2, the processor 201 of the server 200 determines a target location to which the vehicle 100 is to move next. In the present embodiment, the target location is expressed by X, Y, and Z coordinates in the global coordinate system GC. The memory 202 of the server 200 contains a reference route RR stored in advance as a route along which the vehicle 100 is to run. The route is expressed by a node indicating a departure place, a node indicating a way point, a node indicating a destination, and a link connecting nodes to each other. The processor 201 determines the target location to which the vehicle 100 is to move next using the vehicle location information and the reference route RR. The server 200 determines the target location on the reference route RR ahead of a current location of the vehicle 100.

In step S3, the processor 201 of the server 200 generates a running control signal for causing the vehicle 100 to run toward the determined target location. In the present embodiment, the running control signal includes an acceleration and a steering angle of the vehicle 100 as parameters. the processor 201 calculates a running speed of the vehicle 100 from transition of the location of the vehicle 100 and makes comparison between the calculated running speed and a target speed of the vehicle 100 determined in advance. If the running speed is lower than the target speed, the processor 201 generally determines an acceleration in such a manner as to accelerate the vehicle 100. If the running speed is higher than the target speed as, the processor 201 generally determines an acceleration in such a manner as to decelerate the vehicle 100. If the vehicle 100 is on the reference route RR, the processor 201 determines a steering angle and an acceleration in such a manner as to prevent the vehicle 100 from deviating from the reference route RR. If the vehicle 100 is not on the reference route RR, in other words, if the vehicle 100 deviates from the reference route RR, the processor 201 determines a steering angle and an acceleration in such a manner as to return the vehicle 100 to the reference route RR. In other embodiments, the running control signal may include the speed of the vehicle 100 as a parameter instead of or in addition to the acceleration of the vehicle 100.

In step S4, the processor 201 of the server 200 transmits the generated running control signal to the vehicle 100. The processor 201 repeats the acquisition of vehicle location information, the determination of a target location, the generation of a running control signal, the transmission of the running control signal, and others in a predetermined cycle.

In step S5, the processor 111 of the vehicle controller 110 receives the running control signal transmitted from the server 200. In step S6, the processor 111 controls the actuator group 120 of the vehicle 100 using the received running control signal, thereby causing the vehicle 100 to run at the acceleration and the steering angle indicated by the running control signal. The processor 111 repeats the reception of a running control signal and the control over the actuator group 120 in a predetermined cycle. According to the system 10 in the present embodiment, it becomes possible to move the vehicle 100 without using a transport unit such as a crane or a conveyor.

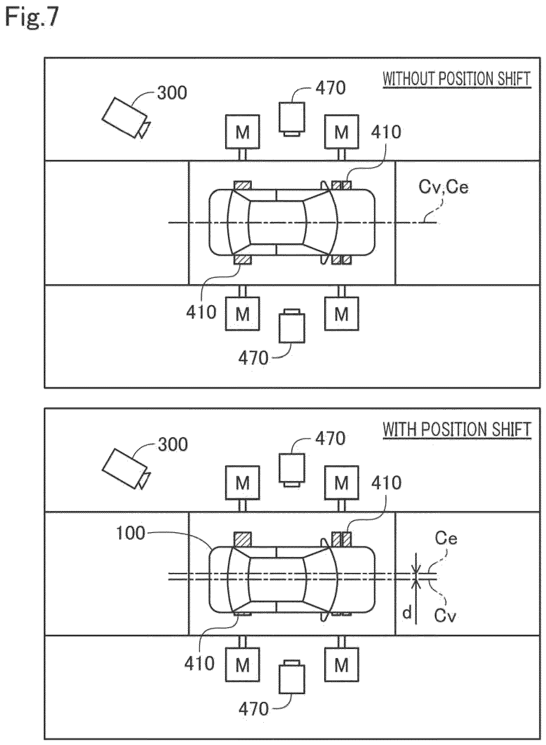

Fig. 7 is an explanatory view showing how the vehicle 100 is inspected. As shown in an upper section of Fig. 7, before implementation of an inspection on the vehicle 100, the vehicle remote control unit 211 of the server 200 controls the vehicle 100 remotely, thereby causing the vehicle 100 to run onto the rollers 410 and stop over the rollers 410 in such a manner that a front-rear axis Cv of the vehicle 100 and a front-rear axis Ce of the inspection facility 400 overlap each other in a top view. Here, the front-rear axis Cv of the vehicle 100 is an axis passing through a center between the right and left front wheels and a center between the right and left rear wheels in a top view. The front-rear axis Ce of the inspection facility 400 is an axis passing through a center between the rollers 410 for the right and left front wheels and a center between the rollers 410 for the right and left rear wheels in a top view. In the following description, a state without position shift between the vehicle 100 and the roller 410 means a state without shift between the front-rear axis Cv of the vehicle 100 and the front-rear axis Ce of the inspection facility 400 in a top view. A state with position shift between the vehicle 100 and the roller 410 means a state with shift between the front-rear axis Cv of the vehicle 100 and the front-rear axis Ce of the inspection facility 400 in a top view.

During a drive inspection for inspecting the driving device of the vehicle 100, with the wheel 101 being supported by the roller 410, the vehicle remote control unit 211 drives the wheel 101 to rotate, thereby rotating the roller 410 dependently. During the drive inspection, a peripheral velocity of the wheel 101 driven to rotate and a peripheral velocity of the roller 410 rotated dependently are equal to each other, so that a front-rear position of the vehicle 100 does not change. The vehicle remote control unit 211 controls the vehicle 100 remotely in such a manner that the rotation speed of the wheel 101 reaches a target rotation speed set in advance. The facility remote control unit 212 controls the inspection facility 400 remotely, thereby detecting the rotation speed of the roller 410 using the rotation speed sensor 450. After the rotation speed of the wheel 101 reaches the target rotation speed, the vehicle remote control unit 211 stops the rotation of the wheel 101. Stopping the rotation of the wheel 101 stops the rotation of the roller 410. The inspection result generating unit 213 generates drive inspection results using detection results about the rotation speed of the roller 410. The drive inspection results contain at least one of information about whether the driving device of the vehicle 100 has operated normally and information about whether a speed meter of the vehicle 100 shows a correct value.

During a brake inspection for inspecting the braking device of the vehicle 100, with the wheel 101 being supported by the roller 410, the facility remote control unit 212 drives the roller 410 to rotate, thereby rotating the wheel 101 dependently. During the brake inspection, a peripheral velocity of the roller 410 driven to rotate and a peripheral velocity of the wheel 101 rotated dependently are equal to each other, so that a front-rear position of the vehicle 100 does not change. The facility remote control unit 212 controls the inspection facility 400 remotely in such a manner that the rotation speed of the roller 410 reaches a target rotation speed set in advance. When the rotation speed of the roller 410 reaches the target rotation speed, the vehicle remote control unit 211 controls the vehicle 100 remotely, thereby actuating the braking device of the vehicle 100. Furthermore, the facility remote control unit 212 stops transmission of driving force from the motor 420 to the roller 410. The facility remote control unit 212 detects braking force using the braking force sensor 460 applied from the braking device of the vehicle 100 to the roller 410. The inspection result generating unit 213 generates brake inspection results using detection results about the braking force. The brake inspection results contain information about whether the braking device of the vehicle 100 has operated normally.

As shown in a lower section of Fig. 7, the position of the vehicle 100 relative to the roller 410 may be shifted to right and left during the drive inspection or the brake inspection. The position shift of the vehicle 100 might be caused by shift of the direction of the wheel 101 relative to the roller 410 or vibration of the vehicle 100, for example. The position shift of the vehicle 100 might also be caused by failing to control the position of the vehicle 100 accurately due to low accuracy of detection of the position of the vehicle 100. As the amount of position shift d of the vehicle 100 relative to the roller 410 becomes larger, the wheel 101 becomes more likely to deviate from over the roller 410. Deviation of the wheel 101 from over the roller 410 makes it impossible to continue the inspection. In response to this, the server 200 controls the steering device of the vehicle 100 remotely in order for the amount of position shift d not to exceed a predetermined allowable range during the drive inspection or the brake inspection, thereby compensating for the position shift of the vehicle 100.

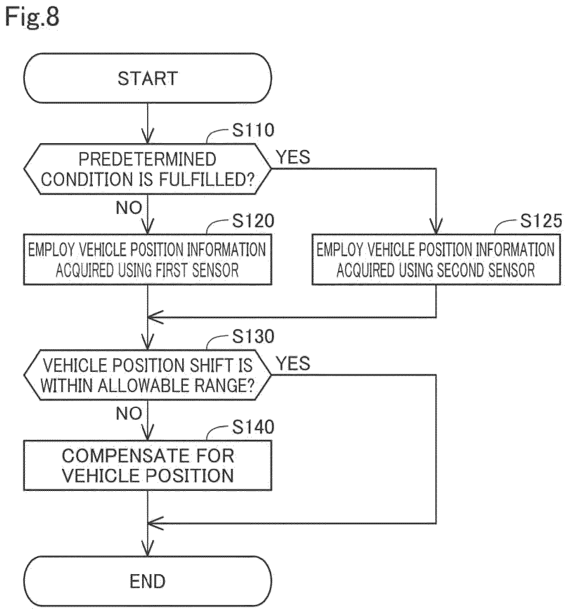

Fig. 8 is a flowchart showing a processing procedure of deviation preventing control for preventing the wheel 101 from deviating from over the roller 410 during the inspection. In the present embodiment, the deviation preventing control is performed repeatedly by the processor 201 of the server 200 from when the vehicle 100 enters a range where the vehicle 100 is detectable by the position sensor 470 to when the inspection on the vehicle 100 is finished.

When the deviation preventing control is started, the server 200 judges in step S110 whether a predetermined condition is fulfilled. In the present embodiment, the predetermined condition is a condition that the vehicle 100 be over the roller 410 and the rotation speed of the wheel 101 detected by the wheel speed sensor 140 be equal to or greater than a predetermined speed. The predetermined speed may be the rotation speed of the wheel 101 at which a peripheral velocity of the wheel 101 becomes 40 kilometers per hour, for example. The predetermined condition may be a condition that the vehicle 100 be over the roller 410 and the rotation speed of the roller 410 detected by the rotation speed sensor 450 be equal to or greater than a predetermined speed. The predetermined condition may be irrespective of the rotation speed of the wheel 101 or the roller 410. The predetermined condition may be a condition that the vehicle 100 be over the roller 410, for example.

If the predetermined condition is judged to be fulfilled in step S110, the server 200 employs vehicle position information acquired using the external sensor 300 for position control over the vehicle 100 in step S120. By contrast, if the predetermined condition is judged not to be fulfilled in step S110, the server 200 employs vehicle position information acquired using the position sensor 470 for position control over the vehicle 100 in step S125.

In step S130, the server 200 judges whether position shift of the vehicle 100 is within an allowable range. In the present embodiment, if the amount of position shift d of the vehicle 100 is equal to or less than a predetermined threshold, the server 200 judges that the position shift of the vehicle 100 is within the allowable range. If the amount of position shift d of the vehicle 100 exceeds the threshold, the server 200 judges that the position shift of the vehicle 100 is beyond the allowable range. The server 200 calculates the amount of position shift d of the vehicle 100 using position information about the front-rear axis Ce of the inspection facility 400 stored in advance in the memory 202 and the vehicle position information employed in step S120 or step S125.

In the present embodiment, the server 200 determines the allowable range in response to the rotation speed of the wheel 101. The position shift of the vehicle 100 increases more rapidly as the rotation speed of the wheel 101 or the roller 410 is higher. For preventing deviation of the wheel 101 from over the roller 410, it is preferable to compensate for the position shift of the vehicle 100 at an earlier stage as the rotation speed of the wheel 101 or the roller 410 is higher. Thus, the server 200 determines the threshold in such a manner that the allowable range becomes narrower as the rotation speed of the wheel 101 becomes higher. For example, the server 200 may determine the threshold using a table containing association between the rotation speed of the wheel 101 acquired from the wheel speed sensor 140, and a rotation speed and a threshold stored in advance in the memory 202. In other embodiments, the allowable range may be fixed.

If the position shift of the vehicle 100 is judged not to be within the allowable range in step S130, the server 200 controls the steering device of the vehicle 100 remotely, thereby compensating for the position shift of the vehicle 100 in step S140. The server 200 may decelerate the rotation of the wheel 101 or the roller 410 in addition to compensating for the position shift of the vehicle 100. By contrast, if the position shift of the vehicle 100 is judged to be within the allowable range in step S130, the server 200 skips the process in step S140. Then, the server 200 repeats the deviation preventing control by starting from step S110 again. The server 200 repeats the deviation preventing control until the inspection on the vehicle 100 is finished.

In the system 10 according to the above-described present embodiment, if the predetermined condition including a provision that the vehicle 100 be over the roller 410 is not fulfilled, the server 200 controls the position of the vehicle 100 using the external sensor 300. If this predetermined condition is fulfilled, the server 200 controls the position of the vehicle 100 using the position sensor 470 providing higher accuracy of detection of the position of the vehicle 100 than the external sensor 300. Thus, it is possible to adjust a right-left position of the vehicle 100 over the roller 410 accurately. This makes it possible to reduce a likelihood of deviation of the vehicle 100 from over the roller 410 during the inspection.

During the drive inspection or the brake inspection, position shift of the vehicle 100 increases more rapidly as the rotation speed of the wheel 101 or the roller 410 is higher. Thus, in a situation where the rotation speed of the wheel 101 or the roller 410 is high, it is preferable to adjust the position of the vehicle 100 accurately in order to avoid position shift of the vehicle 100. In a situation where the rotation speed of the wheel 101 or the roller 410 is high, on the occurrence of position shift of the vehicle 100, it is preferable to compensate for the position shift of the vehicle 100 at an early stage. In the present embodiment, in response to this problem, the server 200 controls the position of the vehicle 100 using the position sensor 470 if the vehicle 100 is over the roller 410 and if the rotation speed of the wheel 101 is equal to or greater than a predetermined speed. By doing so, it becomes possible to adjust a right-left position of the vehicle 100 accurately over the roller 410 in a situation where the rotation speed of the wheel 101 or the roller 410 is high. In addition, the server 200 makes an allowable range for position shift of the vehicle 100 narrower as the rotation speed of the wheel 101 becomes higher. This allows the position shift of the vehicle 100 to be compensated for at an early stage in a situation where the rotation speed of the wheel 101 or the roller 410 is high.

### B. Second Embodiment

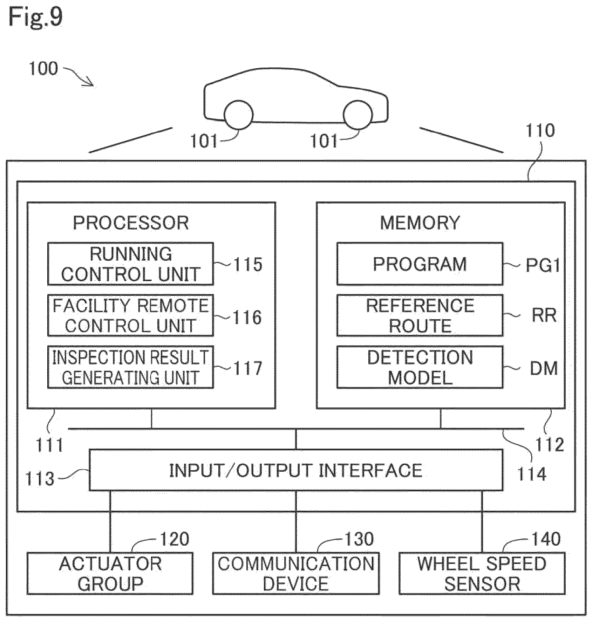

Fig. 9 is an explanatory view showing the configuration of the vehicle 100 according to a second embodiment. The second embodiment differs from the first embodiment in that the system 10 does not include the server 200, and the vehicle 100 is caused to run by autonomous control by the vehicle 100 instead of remote control from the server 200. Unless specified otherwise, the other configuration is the same as that of the first embodiment. In the second embodiment, the vehicle controller 110 corresponds to the "controller" of the present disclosure.

In the present embodiment, the memory 112 of the vehicle controller 110 contains a reference route RR and a detection model DM stored in advance therein. The communication device 130 is communicable with the external sensor 300 and the inspection facility 400 via radio communication. The processor 111 executes the computer program PG1 stored in advance in the memory 112 to function as the running control unit 115, a facility remote control unit 116, and an inspection result generating unit 117. In the present embodiment, the running control unit 115 causes the vehicle 100 to run by generating a running control signal by itself. The facility remote control unit 116 fulfills a function comparable to that of the facility remote control unit 212 of the first embodiment and controls the inspection facility 400 remotely. The inspection result generating unit 117 is comparable to the inspection result generating unit 213 of the first embodiment and generates inspection results about the vehicle 100.

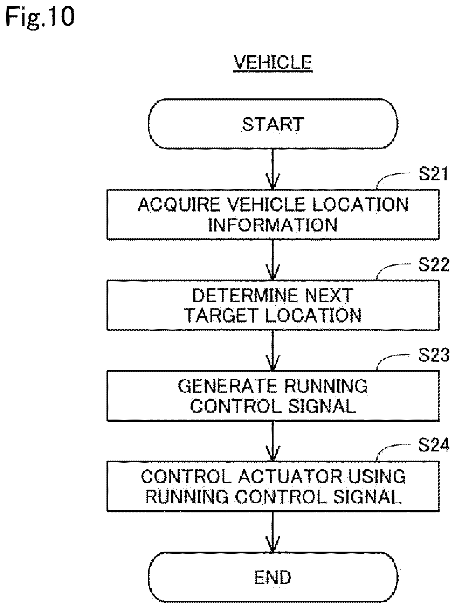

Fig. 10 is a flowchart showing a processing procedure of running control over the vehicle 100 according to the second embodiment. In step S21, the processor 111 of the vehicle controller 110 acquires vehicle location information using detection result output from the camera as the external sensor 300. In step S22, the processor 111 determines a target location to which the vehicle 100 is to move next. In step S23, the processor 111 generates a running control signal for causing the vehicle 100 to run to the determined target location. In step S24, the processor 111 controls the actuator group 120 using the generated running control signal, thereby causing the vehicle 100 to run by following a parameter indicated by the running control signal. The processor 111 repeats the acquisition of vehicle location information, the determination of a target location, the generation of a running control signal, and the control over the actuator group 120 in a predetermined cycle. According to the system 10 in the present embodiment, it is possible to cause the vehicle 100 to run by autonomous control without controlling the vehicle 100 remotely using the server 200.

In the system 10 according to the above-described present embodiment, it is possible to inspect the vehicle 100 without remote control over the vehicle 100 by the server 200 and to reduce a likelihood of deviation of the vehicle 100 from over the roller 410 during the inspection.

### C. Other Embodiments

(C1) In each of the above-described embodiments, the deviation preventing control is performed by the server 200 or the vehicle controller 110. By contrast, in another embodiment, the deviation preventing control may be performed by the facility controller 430 of the inspection facility 400. This embodiment also makes it possible to reduce a likelihood of deviation of the vehicle 100 from over the roller 410 during the inspection. In this embodiment, the facility controller 430 corresponds to the "controller" of the present disclosure.

(C2) In each of the above-described embodiments, the server 200 or the vehicle controller 110 changes an allowable range for position shift in response to the rotation speed of the wheel 101 during the deviation preventing control. By contrast, in another embodiment, the server 200 or the vehicle controller 110 may change an allowable range for position shift in response to a degree of unevenness of the position of the vehicle 100 detected in a predetermined period. A larger degree of unevenness of the detected position of the vehicle 100 makes it more likely that the position of the vehicle 100 recognized by the server 200 or the vehicle controller 110 will differ from an actual position of the vehicle 100, resulting in a higher likelihood of deviation of the vehicle 100 from over the roller 410. A larger degree of unevenness of the detected position of the vehicle 100 also makes it more likely that an actual position of the vehicle 100 will become unstable, resulting in a higher likelihood of deviation of the vehicle 100 from over the roller 410. Thus, by making the allowable range for the position shift narrower as a degree of unevenness of the detected position of the vehicle 100 becomes larger, it becomes possible to effectively reduce a likelihood of deviation of the vehicle 100 from over the roller 410 during the inspection.

(C3) In each of the above-described embodiments, if the predetermined condition including a provision that the vehicle 100 be over the roller 410 is not fulfilled during the deviation preventing control, the server 200 or the vehicle controller 110 controls the position of the vehicle 100 by employing vehicle position information acquired using the external sensor 300. If this predetermined condition is fulfilled, the server 200 or the vehicle controller 110 controls the position of the vehicle 100 by employing vehicle position information acquired using the position sensor 470. In other words, a ratio between a contribution of the external sensor 300 and a contribution of the position sensor 470 to the vehicle position information is changed once from 0:100 to 100:0 between before and after fulfillment of the predetermined condition. By contrast, in another embodiment, the server 200 or the vehicle controller 110 may change a ratio between a contribution of the external sensor 300 and a contribution of the position sensor 470 to the vehicle position information stepwise after fulfillment of the predetermined condition. A contribution to the vehicle position information mentioned herein means a degree of influence of a position detected by each sensor over a position expressed by the vehicle position information. For example, increasing a contribution of the external sensor 300 to the vehicle position information relatively makes a position expressed by the vehicle position information approximate more to a position detected by the external sensor 300. Increasing a contribution of the position sensor 470 to the vehicle position information relatively makes a position expressed by the vehicle position information approximate more to a position detected by the position sensor 470.

### <Contribution Changing Method 1>

The server 200 or the vehicle controller 110 may change a ratio between a contribution of the external sensor 300 and a contribution of the position sensor 470 to vehicle position information stepwise in response to the rotation speed of the wheel 101 or the roller 410. In this case, the server 200 or the vehicle controller 110 may determine a value of n in a range from 0 to 100 in response to the rotation speed of the wheel 101 or the roller 410, calculate a position coordinate of the vehicle 100 as: (a position coordinate of the vehicle 100 detected by the external sensor 300) × (100 - n)% + (a position coordinate of the vehicle 100 detected by the position sensor 470) × n%, and use the calculated position coordinate for position control over the vehicle 100. To prevent deviation of the vehicle 100 from over the roller 410, it is preferable for the server 200 or the vehicle controller 110 to increase a value of n as the rotation speed of the wheel 101 or the roller 410 is higher, in other words, to increase a contribution of the position sensor 470 relatively as the rotation speed of the wheel 101 or the roller 410 is higher.

### <Contribution Changing Method 2>

The server 200 or the vehicle controller 110 may change a ratio between a contribution of the external sensor 300 and a contribution of the position sensor 470 to vehicle position information stepwise in response to a degree of unevenness of the position of the vehicle 100 detected by the external sensor 300. In this case, the server 200 or the vehicle controller 110 may determine a value of n in a range from 0 to 100 in response to a degree of unevenness of the position of the vehicle 100 detected by the external sensor 300, calculate a position coordinate of the vehicle 100 as: (a position coordinate of the vehicle 100 detected by the external sensor 300) × (100 - n)% + (a position coordinate of the vehicle 100 detected by the position sensor 470) × n%, and use the calculated position coordinate for position control over the vehicle 100. To prevent deviation of the vehicle 100 from over the roller 410, it is preferable for the server 200 or the vehicle controller 110 to increase a value of n as a degree of unevenness of the position of the vehicle 100 detected by the external sensor 300 is larger, in other words, to increase a contribution of the position sensor 470 relatively as a degree of unevenness of the position of the vehicle 100 detected by the external sensor 300 is larger.

(C4) In each of the above-described embodiments, if the predetermined condition including a provision that the vehicle 100 be over the roller 410 is fulfilled during the deviation preventing control, the server 200 or the vehicle controller 110 controls the position of the vehicle 100 using the position sensor 470 of the inspection facility 400. By contrast, in another embodiment where the vehicle 100 is mounted with a position sensor that detects the position of the vehicle 100 relative to the inspection facility 400, the server 200 or the vehicle controller 110 may control the position of the vehicle 100 using the position sensor mounted on the vehicle 100. In this case, the position sensor mounted on the vehicle 100 corresponds to the "second sensor" of the present disclosure.

(C5) In each of the above-described embodiments, the external sensor 300 is not limited to the camera but may be the distance measuring device, for example. The distance measuring device is a light detection and ranging (LiDAR) device, for example. In this case, detection result output from the external sensor 300 may be three-dimensional point cloud data representing the vehicle 100. The server 200 and the vehicle 100 may acquire the vehicle location information through template matching using the three-dimensional point cloud data as the detection result and reference point cloud data, for example.

(C6) In the above-described first embodiment, the server 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.
(1) The server 200 may acquire vehicle location information, determine a target location to which the vehicle 100 is to move next, and generate a route from a current location of the vehicle 100 indicated by the acquired vehicle location information to the target location. The server 200 may generate a route to the target location between the current location and a destination or generate a route to the destination. The server 200 may transmit the generated route to the vehicle 100. The vehicle 100 may generate a running control signal in such a manner as to cause the vehicle 100 to run along the route received from the server 200 and control the actuator group 120 using the generated running control signal.
(2) The server 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control the actuator group 120 using the generated running control signal.
(3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. More specifically, the internal sensor might include a camera, LiDAR, a millimeter wave radar, an ultrasonic wave sensor, a GPS sensor, an acceleration sensor, and a gyroscopic sensor, for example. For example, in the foregoing embodiment (1), the server 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(C7) In the above-described second embodiment, the vehicle 100 may be equipped with an internal sensor, and detection result output from the internal sensor may be used in at least one of generation of a route and generation of a running control signal. For example, the vehicle 100 may acquire detection result from the internal sensor, and in generating the route, may reflect the detection result from the internal sensor in the route. The vehicle 100 may acquire detection result from the internal sensor, and in generating the running control signal, may reflect the detection result from the internal sensor in the running control signal.

(C8) In the above-described second embodiment, the vehicle 100 acquires vehicle location information using detection result from the external sensor 300. By contrast, the vehicle 100 may be equipped with an internal sensor, the vehicle 100 may acquire vehicle location information using detection result from the internal sensor, determine a target location to which the vehicle 100 is to move next, generate a route from a current location of the vehicle 100 indicated by the acquired vehicle location information to the target location, generate a running control signal for running along the generated route, and control the actuator group 120 of the vehicle 100 using the generated running control signal. In this case, the vehicle 100 is capable of running without using any detection result from the external sensor 300. The vehicle 100 may acquire target arrival time or traffic congestion information from outside the vehicle 100 and reflect the target arrival time or traffic congestion information in at least one of the route and the running control signal.

(C9) In the above-described first embodiment, the server 200 automatically generates a running control signal to be transmitted to the vehicle 100. By contrast, the server 200 may generate a running control signal to be transmitted to the vehicle 100 in response to operation by an external operator existing outside the vehicle 100. For example, the external operator may operate an operating device including a display on which a captured image output from the external sensor 300 is displayed, steering, an accelerator pedal, and a brake pedal for operating the vehicle 100 remotely, and a communication device for making communication with the server 200 through wire communication or wireless communication, for example, and the server 200 may generate a running control signal responsive to the operation on the operating device.

(C10) In each of the above-described embodiments, the vehicle 100 is simply required to have a configuration to become movable by unmanned driving. The vehicle 100 may embodied as a platform having the following configuration, for example. More specifically, in order to fulfill three functions including "run," "turn," and "stop" by unmanned driving, the vehicle 100 is simply required to include at least the vehicle controller 110 and the actuator group 120. In order for the vehicle 100 to acquire information from outside for unmanned driving, the vehicle 100 is simply required to include the communication device 130 further. Specifically, the vehicle 100 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from the factory FC, or a remaining component such as a bodyshell may be mounted on the vehicle 100 after the vehicle 100 is shipped from the factory FC while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.

(C11) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(C12) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

(C13) In each of the above embodiments, some or all of the functions and processes implemented by software may be implemented by hardware. Also, some or all of the functions and processes implemented by hardware may be implemented by software. As hardware for implementing the various functions in each of the above embodiments, various circuits such as integrated circuits and discrete circuits may be used.

The disclosure is not limited to any of the embodiment and its modifications described above but may be implemented by a diversity of configurations without departing from the scope of the disclosure. For example, the technical features of any of the above embodiments and their modifications may be replaced or combined appropriately, in order to solve part or all of the problems described above or in order to achieve part or all of the advantageous effects described above. Any of the technical features may be omitted appropriately unless the technical feature is described as essential in the description hereof.

## Claims

1. A system (10) comprising:
a vehicle (100) configured to be able to run by unmanned driving;
an inspection facility (400) having a roller (410) configured be able to rotate while supporting a wheel (101) of the vehicle;
a first sensor (300) configured to detect the position of the vehicle;
a second sensor (470) configured to detect the position of the vehicle, wherein the second sensor is configured to detect the position of the vehicle with higher accuracy than the first sensor; and
a controller (200;110;430) configured to acquire position information about the vehicle using at least one of the first sensor and the second sensor, wherein the controller is configured to control the vehicle using the position information, wherein the controller is configured to acquire the position information using the first sensor when a predetermined condition including a provision that the vehicle be over the roller is not fulfilled, wherein the controller is configured to acquire the position information using at least the second sensor when the predetermined condition is fulfilled.

2. The system according to claim 1,
wherein the predetermined condition further includes a provision that the rotation speed of the wheel or the rotation speed of the roller be equal to or greater than a predetermined rotation speed.

3. The system according to claim 1,
wherein the predetermined condition further includes a provision that a degree of unevenness of the position of the vehicle detected by the first sensor be equal to or greater than a predetermined degree.

4. The system according to claim 1,
wherein the controller is configured to acquire the position information using the first sensor and the second sensor when the predetermined condition is fulfilled, and
wherein the controller is configured to change a contribution of the first sensor and a contribution of the second sensor to the position information in response to the rotation speed of the wheel or the rotation speed of the roller when the predetermined condition is fulfilled.

5. The system according to claim 1,
wherein the controller configured to acquire the position information using the first sensor and the second sensor when the predetermined condition is fulfilled, and
wherein the controller configured to change a contribution of the first sensor and a contribution of the second sensor to the position information in response to a degree of unevenness of the position of the vehicle detected by the first sensor when the predetermined condition is fulfilled.
